# EUROPÄISCHE PATENTSCHRIFT

(11) **EP 0 970 875 B1**
(45) Veröffentlichungstag und Bekanntmachung des Hinweises auf die Patenterteilung: **08.03.2006**
(21) Anmeldenummer: 99110654.3
(22) Anmeldetag: 02.06.1999
(51) Int. Cl.: B62D 1/28, B62D 6/00

(54) **Lenksystem für Kraftfahrzeuge**
Steering system for vehicles
Système de direction pour véhicules

(30) Priorität: 10.07.1998 DE 19831071
(43) Veröffentlichungstag der Anmeldung: 12.01.2000
(73) Patentinhaber: ThyssenKrupp Presta SteerTec GmbH, 40476 Düsseldorf (DE)
(72) Erfinder: Bohner, Hubert, 71032 Böblingen (DE); Freitag, Rainer, 73277 Owen (DE); Moser, Martin, 70736 Fellbach (DE); Schneckenburger, Reinhold, 71277 Rutesheim (DE)
(74) Vertreter: LENZING GERBER

(56) Entgegenhaltungen:
- EP-A- 0 447 626
- EP-A- 0 718 173
- US-A- 5 742 141
- PATENT ABSTRACTS OF JAPAN vol. 1997, no. 12, 25. Dezember 1997 (1997-12-25) & JP 09 221052 A (HONDA MOTOR CO LTD), 26. August 1997 (1997-08-26)

## Beschreibung

Die Erfindung betrifft ein Lenksystem für Kraftfahrzeuge nach dem Oberbegriff des Anspruch 1 mit einer vom Fahrer betätigbaren Lenkhandhabe, z.B. Lenkhandrad, mit einem Lenkstellantrieb zur Lenkverstellung lenkbarer Fahrzeugräder, mit einem mit der Lenkhandhabe betätigbaren Lenkwinkel-Sollwertgeber, mit einem mit den lenkbaren Fahrzeugrädern betätigbaren Lenkwinkel-Istwertgeber und mit einer den Lenkstellantrieb in Abhängigkeit von einem Vergleich der Soll- und Istwerte des Lenkwinkels betätigenden Regel- und Steueranordnung

Ein derartiges Lenksystem kann insbesondere für einen Steer-by-wire-Betrieb ausgebildet sein, wobei dann gegebenenfalls eine bei herkömmlichen Lenkungen übliche mechanische Lenksäule durch ein anderes mechanisches System oder auch durch ein hydraulisches System, insbesondere hydrostatisches System, ersetzt sein kann.

Um die Fahrzeugsicherheit und somit die Sicherheit der Fahrzeuginsassen zu erhöhen, werden von den Automobilherstellern größte Anstrengungen auf der Basis unterschiedlicher Konzepte unternommen. Entsprechend einem dieser Konzepte werden Maßnahmen aufgezeigt, durch die z.B. die Kollisionsgefahr des Fahrzeuges mit einem Hindernis reduziert wird. Derartige Kollisionen können beispielsweise dann auftreten, wenn sich beim Spurwechsel eines ersten Fahrzeuges ein zweites Fahrzeug im sogenannten "toten Winkel" des ersten Fahrzeuges befindet. Weniger schwerwiegend aber um so häufiger sind Kollisionen beim Rangieren des Fahrzeuges. Auch führt die Angst vor Kollisionen z.B. beim Einparken dazu, daß bei knappen Parklücken oftmals gar kein Versuch unternommen wird, das Fahrzeug einzuparken.

Für das Rangieren des Fahrzeuges sind elektronische Einparkhilfen bekannt, die auf der Basis einer Entfernungsmeß-Sensorik bei Erreichen eines kritischen Abstandes zwischen dem Fahrzeug und einem Hindernis ein akustisches Signal erzeugen und den Fahrer warnen. Bei höheren Geschwindigkeiten sind derartige Einparkhilfen zur Vermeidung von Kollisionen, z.B. beim Spurwechsel, ungeeignet.

Aus der EP 0 738 647 A2 ist eine herkömmliche Servolenkung mit einer starren Lenksäule bekannt, die einen Servomotor zur Unterstützung einer vom Fahrer aufgebrachten Handlenkkraft aufweist. Außerdem verfügt die bekannte Servolenkung über Mittel zum Entscheiden, ob die Möglichkeit eïner Kollision zwischen dem Fahrzeug und einem in der Lenkrichtung festgestellten Hindernis besteht. Wenn bei der bekannten Servolenkung die Gefahr einer Kollision festgestellt wird, erfolgt eine Reduzierung der Servounterstützung, so dass ein Kollisionskurs nur mit erhöhter Handlenkkraft gesteuert werden kann. Die bekannte Servolenkung kann dabei zur Vermeidung einer Kollision schwergängig wie eine übliche Servolenkung arbeiten, deren Servounterstützung ausgefallen ist.

EP 0 447 626 A2 beschreibt eine kybernetische Lenkung, bei der ein erster Elektromotor eine Rückmeldekraft auf eine Lenkhandhabe ausüben kann, wobei ein Lenkstellantrieb durch einen zweiten Elektromotor ausgebildet ist und wobei die Lenkhandhabe über eine magnetische Kupplung unmittelbar an ein Lenkgetriebe koppelbar ist.

US 5,742,141 beschreibt ein Parkvorgang-Kontrollsystem, bei dem durch Verwen-dung von gemessenen Positionsdaten eines Fahrzeugs eine Fahrzeug-Bewegungskurve errechnet wird, wobei ein Abweichen von der berechneten Bewegungskurve eine Auswirkung auf eine Servolenkung des Fahrzeugs hat, welche von dem Fahrzeugführer als va-riabler Widerstand in der Lenkung gefühlt wird.

EP 0 718 173 A2 beschreibt ein elektrisches Servo-Lenksystem, bei dem, ausgelöst durch entsprechende Daten eines Hindernis-Sensors und gegebenenfalls Daten eines Lenkwinkel-Sensors, eine Vibration elektromotorisch auf eine Lenksäule ausübbar ist, so dass der Fahrer durch die Vibration gewarnt wird.

EP 0 556 082 A1 beschreibt einen Lenk stellantrieb, der z.B. dann in die Lenküng eingreift, wenn ein Hindermis erbannt wird, wobei der Lenkstellantrieb als hydraulisches Kolben-Zylinder-Aggregat ausgebildet ist.

Das aus der bekannten Servolenkung bekannte Prinzip zur Kollisionsvermeidung kann jedoch nur auf ein Lenksystem mit starrer Lenksäule angewendet werden. Eine Verwendung bei einem Lenksystem, das in einem Steer-by-wire-Betrieb arbeitet oder bei einer Lenkung mit offener Lenksäule, d.h. eine Lenkung ohne starre Lenksäule, beispielsweise eine Lenkung mit hydraulischer Stange, eine Lenksäule mit Kupplungen, Planetensätzen oder sonstigen Getrieben, die den starren Durchtrieb vom Lenkrad zu den gelenkten Rädern unterbrechen, ist nicht möglich. Denn bei derartigen Lenksystemen ohne starre Kopplung zwischen einer Lenkhandhabe und den gelenkten Rädern würde eine solche Reduktion der Servounterstützung vom Fahrer an der Lenkhandhabe nicht bemerkt werden, so daß es bei auf die gelenkten Räder einwirkenden Radseitenkräften zu vom Fahrer nicht mehr kontrollierbaren Fahrtrichtungsänderungen kommen kann.

Die vorliegende Erfindung beschäftigt sich mit dem Problem, ein Lenksystem der eingangs genannten Art dahingehend auszugestalten, daß eine Kollisionsgefahr zwischen einem damit ausgestatteten Fahrzeug und einem Hindernis reduziert wird, wobei das Lenksystem weiterhin für einen Steer-by-wire-Betrieb geeignet sein soll.

Dreses Problem wird erfindungsgemäß durch ein Lenksystem mit den Merkmalen des Anspruches 1 gelöst.

Die Erfindung beruht dabei auf dem allgemeinen Gedanken, derart in die Lenkung einzugreifen, daß die Einstellung eines mit einem Kollisionslenkwinkel übereinstimmenden Soll-Lenkwinkels durch den Fahrer erschwert oder sogar verhindert wird. Mit Hilfe dieser Maßnahme werden zu Kollisionen führende Fehllenkungen bereits auf der Sollwertseite des Lenksystems abgefangen bzw. reduziert, während die Istwertseite des Lenksystems unverändert bleiben kann. Insbesondere kann dabei der Lenkstellantrieb dieselben hohen stabilisierenden Stellkräfte auf die lenkbaren Fahrzeugräder übertragen. Wenn die Einstellung eines mit einem der Kollisionswinkel übereinstimmenden Soll-Lenkwinkels erschwert oder verhindert ist, folgt aus der unverändert bestehenden Abhängigkeit des Ist-Lenkwinkels vom Soll-Lenkwinkel, daß auch ein mit einem der Kollisionslenkwinkel übereinstimmender Ist-Lenkwinkel nur schwer oder gar nicht eingestellt werden kann, so daß effektiv ein Kollisionskurs des Fahrzeuges mit einem festgestellten Hindernis behindert oder vermieden wird.

Durch die unveränderte Istwertseite des Lenksystems können beispielsweise auf die lenkbaren Fahrzeugräder einwirkende Seitenkräfte kein unkontrolliertes Lenkmanöver verursachen. Das erfindungsgemäße Lenksystem ist daher in besonderer Weise für einen Steer-by-wire-Betrieb geeignet.

Das der Erfindung zugrundeliegende Problem wird außerdem durch ein Lenksystem mit den Merkmalen des Anspruches 2 gelöst.

Die Erfindung beruht hier auf dem allgemeinen Gedanken, insbesondere bei einem in einem Steer-by-wire-Betrieb arbeitenden Lenksystem die Abhängigkeit des Ist-Lenkwinkels vom Soll-Lenkwinkel dahingehend zu modifizieren, daß die Einstellung eines durch einen Soll-Lenkwinkel vorgegebenen Ist-Lenkwinkels nur solange erfolgt, wie der eingestellte Ist-Lenkwinkel nicht einem der festgestellten Kollisionslenkwinkel entspricht. Darüber hinausgehende Soll-Lenkwinkel bleiben dann unberücksichtigt. Auch diese Maßnahme führt zu einer wirkungsvollen Verhinderung einer Kollision zwischen dem Fahrzeug und einem festgestellten Hindernis. Da auch bei diesem System die Stellkräfte für die Lenkung der lenkbaren Fahrzeugräder unverändert vorhanden sind, kann es auch bei dieser Ausführungsform im Falle von auf die lenkbaren Fahrzeugräder einwirkenden Seitenkräften nicht zu unkontrollierten Lenkbewegungen kommen, wodurch auch dieses Lenksystem bei einem Steer-by-wire-Betrieb verwendet werden kann.

Während diese Lösung dem Lenksystem bzw. dem Fahrzeug Vorrang vor dem Willen des Fahrers gibt, folgt die davor genannte Lösung einer anderen Ideologie und überläßt dem Fahrzeugführer die endgültige Kontrolle über das Fahrzeug.

Insbesondere bei einer Weiterbildung der erstgenannten Variante des erfindungsgemäßen Lenksystems können Gegenlenkmittel vorgesehen sein, mit denen die vom Fahrer betätigbare Lenkhandhabe mit einer Gegenlenkkraft beaufschlagbar ist, die der vom Fahrer auf die Lenkhandhabe aufgebrachten Lenkkraft entgegenwirkt. Die erfindungsgemäß vorgeschlagenen Gegenlenkmittel können das Einstellen eines mit einem der Kollisionswinkel übereinstimmenden Soll-Lenkwinkels erschweren, solange die von ihr erzeugte Gegenlenkkraft kleiner als die vom Fahrer auf die Lenkhandhabe aufgebrachte Lenkkraft ist, oder sogar verhindern, wenn die von ihr erzeugte Gegenlenkkraft gleich oder größer als die vom Fahrer aufgebrachte Lenkkraft ist.

Zum Aufbringen der Gegenlenkkraft können die Gegenlenkmittel mit einer Bremse und/oder mit einem Elektromotor versehen sein, wobei jedes dieser Bauteile mit der Lenkhandhabe oder einem damit verbundenen Lenkstrang gekoppelt ist, um die entsprechenden Gegenlenkkräfte an der Lenkhandhabe zu erzeugen.

Vorzugsweise bei einem Lenksystem, das in einem Steer-by-wire-Betrieb arbeitet, kann zur Verbesserung des Fahrgefühls für den Fahrer ein Handkraftsteller vorgesehen sein, der von der Regel- und Steueranordnung zur Simulation von auf die Lenkräder einwirkenden Seitenkräften betätigt ist und der mit der Lenkhandhabe, insbesondere über einen Lenkstrang, gekoppelt ist, um auf die Lenkhandhabe reduzierte, simulierte Radkräfte zu übertragen, wodurch der Fahrer ein Gefühl für den aktuellen Straßenzustand und Fahrzustand des Fahrzeuges erhält. Ein derartiger Handkraftsteller kann beim erfindungsgemäßen Lenksystem als Gegenlenkmittel dienen und die gewünschten Gegenlenkkräfte erzeugen. Bei einem derartigen Lenksystem können somit die Maßnahmen zur Kollisionsverhinderung nach der Erfindung ohne größeren baulichen Aufwand realisiert werden.

Bei vorteilhaften Ausführungsformen des erfindungsgemäßen Lenksystems können von der Regel- und Steueranordnung betätigte Akustikmittel und/oder Optikmittel und/oder Haptikmittel vorgesehen sein, die beim Versuch, einen mit einem Kollisionswinkel übereinstimmenden Lenkwinkel einzustellen, ein akustisches bzw. optisches bzw. haptisches Signal für den Fahrer generieren. Mit Hilfe eines derartigen Warnsignales kann zusätzlich die Aufmerksamkeit des Fahrers erregt und eine entsprechende Reaktion bewirkt werden.

Bei einer Ausführungsform, die zur Warnung des Fahrers ein haptisches Signal generiert, kann dieses haptische Warnsignal in Form einer Schwingung oder Vibration ausgebildet sein, die an der Lenkhandhabe, insbesondere am Lenkhandrad, spürbar ist. Das haptische Signal kann dabei beispielsweise mit einem vorgenannten Handkraftsteller oder einem vorgenannten Gegenlenkmittel erzeugt werden. Diese Schwingungen oder Vibrationen können dabei der Lenkbewegung des Fahrers überlagert werden, wobei entsprechend einer zweckmäßigen Ausführungsform bei der Betätigung des Lenkstellantriebes in Abhängigkeit des Soll-Lenkwinkels diese, den Lenkwinkel an der Lenkhandhabe überlagernden Schwingungen und Vibrationen ausgefiltert werden, so daß diese Schwingungen und Vibrationen nicht auf die lenkbaren Fahrzeugräder übertragen werden.

Während bei den vorgenannten Ausführungsformen im wesentlichen der Fall angesprochen ist, daß der Fahrer das Fahrzeug in eine Richtung lenken möchte, die voraussichtlich eine Kollision zur Folge haben wird, berücksichtigen die folgenden Ausführungsformen auch Fahrsituationen, in denen zu dem Zeitpunkt, in dem ein Hindernis festgestellt wird, das Fahrzeug bereits einen Kollisionskurs aufweist.

Entsprechend einer vorteilhaften Ausführungsform des erfindungsgemäßen Lenksystems kann bei Vorliegen eines mit einem der Kollisionswinkel übereinstimmenden Ist-Lenkwinkels die Regel- und Steueranordnung durch entsprechende Betätigung des Lenkstellantriebes einen Lenkeingriff zur Einstellung eines nicht mit einem der Kollisionslenkwinkel übereinstimmenden Lenkwinkels durchführen, wobei dieser Lenkeingriff unabhängig vom Soll-Lenkwinkel erfolgen kann. Durch diese Maßnahme können insbesondere beim Rangieren des Fahrzeuges Kollisionen wirksam verhindert werden.

Bei einer zweckmäßigen Ausgestaltung der vorgenannten Ausführungsform kann der vom Soll-Lenkwinkel unabhängige Lenkeingriff in Abhängigkeit des aktuellen Fahrzustandes des Fahrzeuges durchgeführt werden, wobei entsprechende Mittel zur Feststellung des aktuellen Fahrzustandes vorgesehen sind. Beispielsweise ist ein derartiger Lenkeingriff bei langsamen Fahrzeugbewegungen zweckmäßig, um eine Kollision mit einem im geringen Abstand vom Fahrzeug befindlichen Hindernis zu verhindern. Im Unterschied dazu kann die Regel- und Steueranordnung derart programmiert sein, daß ein Lenkeingriff bei höheren Geschwindigkeiten nicht erfolgt.

Bei einer weiteren vorteilhaften Ausführungsform des erfindungsgemäßen Lenksystems kann die Regel- und Steueranordnung in Abhängigkeit des aktuellen Fahrzustandes einen Bremseingriff und/oder einen Motoreingriff und/oder einen Getriebeeingriff und/oder einen Federungseingriff durchführen. Beispielsweise kann ein bei relativ hoher Geschwindigkeit ins Schleudern geratenes Fahrzeug durch einen gezielten Eingriff in die Motorleistung, Federung und dosierte Einzelrad-Bremsung des Fahrzeuges erheblich besser stabilisiert werden, als mit einem Lenkeingriff.

Weitere wichtige Merkmale und Vorteile des erfindungsgemäßen Lenksystems ergeben sich aus den Unteransprüchen, aus der Zeichnung und aus der nachfolgenden Figurenbeschreibung anhand der Zeichnung.

Ein bevorzugtes Ausführungsbeispiel der Erfindung ist in der Zeichnung dargestellt und wird in der nachfolgenden Beschreibung näher erläutert.

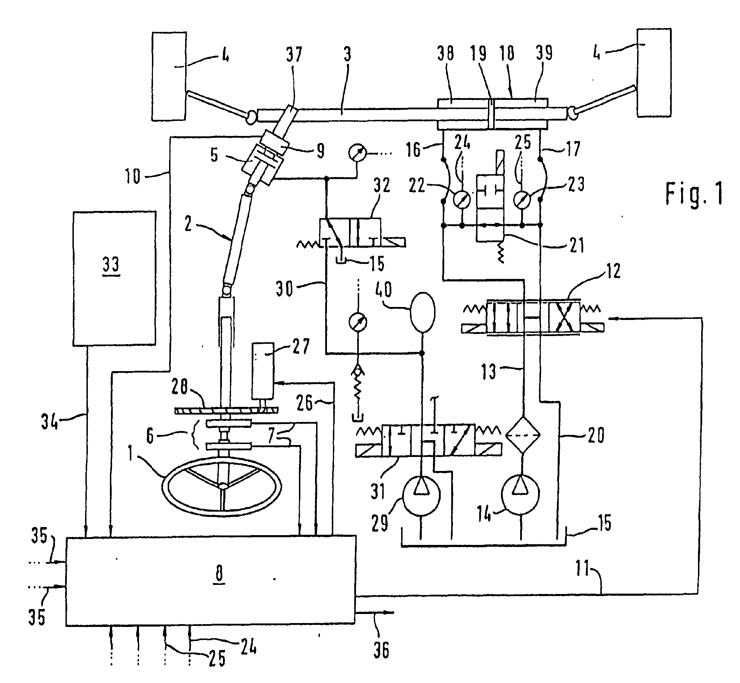

Fig. 1 zeigt eine schematische Prinzipdarstellung eines für einen Steer-by-wire-Betrieb geeigneten Lenksystems nach der Erfindung.

Entsprechend Fig. 1 weist ein erfindungsgemäßes Lenksystem eine als Lenkhandrad 1 ausgebildete Lenkhandhabe auf, an der ein Fahrer eines im übrigen nicht dargestellten Fahrzeuges angreift, um von Hand eine Lenkkraft in das Lenksystem einzugeben. Das Lenkhandrad 1 ist drehfest mit einem Lenkstrang 2 gekoppelt, der an seinem vom Lenkhandrad 1 abgewandten Ende über ein Ritzel 37 eine Lenkstange 3 kämmt. Diese Lenkstange 3 dient zur Lenkung von lenkbaren Fahrzeugrädern 4 einer lenkbaren Achse des Fahrzeuges.

Im Lenkstrang 2 ist eine hydraulische Kupplung 5 angeordnet, die im Normalbetrieb des Lenksystems offen ist und dadurch das Lenkhandrad 1 von der Lenkstange 3 entkoppelt. Das dargestellte Lenksystem arbeitet daher in seinem Normalbetrieb nach dem Steer-by-wire-Prinzip.

Für den Steer-by-wire-Betrieb des Lenksystems ist im Lenkstrang 2 ein Lenkwinkel-Sollwertgeber 6 angeordnet, der mit dem Lenkhandrad 1 betätigbar ist. Der Lenkwinkel-Sollwertgeber 6 generiert Signalwerte, die mit dem jeweils gewünschten Soll-Lenkwinkel korrelieren. Diese Signalwerte werden über entsprechende Signalleitungen 7 an eine zentrale Regel- und Steueranordnung 8 des Lenksystems weitergeleitet. Diese Regel- und Steueranordnung 8 ist vorzugsweise rechnerunterstützt und enthält Speicher sowie darin abgelegte Programme zum Betrieb des Lenksystems.

An einer geeigneten Stelle, hier an dem der Lenkstange 3 zugeordneten Ende des Lenkstranges 2, ist ein Lenkwinkel-Istwertgeber 9 angeordnet, der den aktuellen Lenkwinkel der Fahrzeugräder 4 erfaßt und einen damit korrelierenden Signalwert über eine entsprechende Signalleitung 10 der Regel- und Steueranordnung 8 mitteilt.

Durch einen Vergleich der Soll- und Istwerte des Lenkwinkels ermittelt die Regel- und Steueranordnung 8 ein Steuer- bzw. Regelsignal, das über eine entsprechende Steuerleitung 11 an ein Proportionalstellventil 12 weitergeleitet wird, wodurch dieses in geeigneter Weise geschaltet wird. In Fig. 1 ist die Ausgangsstellung des Stellventils 12 wiedergegeben, die das Stellventil 12 einnimmt, wenn beispielsweise die Stromversorgung des Lenksystems zusammenbricht.

Das Stellventil 12 verbindet eine Druckleitung 13, mit der über eine Hydraulikmittelpumpe 14 aus einem Hydraulikmittelreservoir 15 Hydraulikmittel angesaugt wird, mit Anschlüssen 16 und 17 eines Lenkstellantriebes 18. Je nachdem, in welche Richtung ein Lenkausschlag erwünscht ist, wird der eine Anschluß 16 oder 17 mit mehr Druck beaufschlagt als der andere. Im Ausführungsbeispiel ist der Lenkstellantrieb 18 als doppeltwirkendes Kolben-ZylinderAggregat ausgebildet, dessen Kolben 19 mit der Lenkstange 3 gekoppelt ist, so daß eine Verstellbewegung des Kolbens 19 über die Lenkstange 3 eine Lenkbewegung der Fahrzeugräder 4 bewirkt. Im Lenkstellantrieb 18 sind durch den Kolben 19 zwei Kammern 38 und 39 voneinander getrennt, von denen die eine mit dem Anschluß 16 und die andere mit dem Anschluß 17 kommuniziert. Die Druckdifferenz zwischen den Kammern 38 und 39 bewirkt die Kolbenbewegung. Der jeweilige Anschluß 16 oder 17 des Lenkstellantriebes 18, der mit derjenigen Kammer 38 oder 39 verbunden ist, die den geringeren Druck aufweist, ist über das Stellventil 12 an eine Rücklaufleitung 20 angeschlossen, die das im Lenkstellantrieb 18 verdrängte Hydraulikmittel in das Hydraulikmittelreservoir 15 zurückführt.

Zwischen den Anschlüssen 16 und 17 des Lenkstellantriebes 18 ist ein Sicherheitsventil 21 angeordnet, das die Anschlüsse 16 und 17 im Notfall kurzschließt, um eine Blokkierung der Lenkung durch eine hydraulische Sperrung des Lenkstellantriebes 18 zu verhindern. Im dargestellten Ausführungsbeispiel ist das Sicherheitsventil 21 in dieser Notstellung dargestellt. Im Normalbetrieb des Lenksystems nimmt das Sicherheitsventil 21 jedoch seine andere Position ein, in der die Anschlüsse 16 und 17 über das Sicherheitsventil 21 nicht miteinander verbunden sind. Auch hier nimmt das Sicherheitsventil 21 seine Notstellung dann von selbst ein, wenn beispielsweise ein Stromausfall auftritt.

Die Anschlüsse 16 und 17 kommunizieren mit Drucksensoren 22 und 23, die den aktuellen Hydraulikmitteldruck in den Anschlüssen 16 und 17 und somit in den damit kommunizierenden Kammern 38 und 39 des Lenkstellantriebes 18 messen. Über entsprechende Signalleitungen 24 und 25 werden mit den Druckwerten korrelierende Signalwerte an die Regel- und Steueranordnung 8 weitergeleitet.

Neben dem weiter oben beschriebenen Steuersignal für die Betätigung des Stellventiles 12. und somit zur Betätigung des Lenkstellantriebes 18 sendet die Regel- und Steueranordnung 8 außerdem über eine entsprechende Steuerleitung 26 ein weiteres Steuersignal an einen Handkraftsteller 27, der beispielsweise als Elektromotor ausgebildet ist und über ein Getriebe, z.B. eine Scheibe 28 mit dem Lenkstrang 2 gekoppelt ist. Damit der Fahrer beim Betätigen des Lenkhandrades ein Gefühl für die Seitenkräfte an den Fahrzeugrädern 4 und somit ein Gefühl für das Fahrverhalten des Fahrzeuges erhält, simuliert der Handkraftsteller 27 eine der Lenkkraft des Fahrers entgegenwirkende Gegenkraft, die über die Scheibe 28 und den Lenkstrang 2 auf die Lenkhandhabe 1 übertragen wird. Diese Maßnahme vermittelt dem Fahrer den Eindruck, wie bei einer herkömmlichen Lenkung gegen einen Widerstand anzulenken.

Darüber hinaus kann über den Handkraftsteller 27 das Fahrgefühl bzw. das Straßengefühl noch weiter verbessert werden. Wenn beispielsweise durch Fahrbahnunebenheiten auf die Fahrzeugräder 4 einwirkende Seitenkräfte Druckschwankungen in den Kammern 38 und 39 des Lenkstellantriebes 18 und somit an den Anschlüssen 16 und 17 erzeugen, werden diese von den Drucksensoren 22 und 23 erfaßt und über die Signalleitungen 24 und 25 an die Regel- und Steueranordnung 8 weitergeleitet. Dort werden entsprechende Steuersignale für den Handkraftsteller 27 berechnet, so daß auch die beispielhaft durch Bodenunebenheiten ausgelösten, an den Fahrzeugrädern 4 wirkenden Seitenkräfte am Lenkhandrad 1 simuliert werden können und dort vom Fahrer spürbar sind, obwohl das Lenkhandrad 1 beim Steer-by-wire-Betrieb des Lenksystems durch die offene Kupplung 5 von den Bewegungen der Fahrzeugräder 4 an sich entkoppelt ist.

Um den Steer-by-wire-Betrieb des Lenksystems zu aktivieren, wird die Kupplung 5 mit einem Hydraulikdruck beaufschlagt, der durch eine zweite Hydraulikmittelpumpe 29 erzeugt wird, die sonst beispielsweise zur Erzeugung eines Hydraulikdrukkes für eine Niveauregulierungseinrichtung des Fahrzeuges dient. Dabei wird die Druckseite der Hydraulikmittelpumpe 29 über eine Druckleitung 30 bei einem entsprechend geschaltetem Speicherladeventil 31 und einem entsprechend geschaltetem Kupplungsschaltventil 32 mit der Kupplung 5 hydraulisch verbunden. Wenn an der Kupplung 5 ein entsprechender, hydraulischer Schaltdruck anliegt, öffnet diese und entkoppelt dadurch die Lenkstange 3 von der Lenkhandhabe 1.

Im Notfall, wenn beispielsweise die Elektrik des Lenksystems zusammenbricht, nimmt das Kupplungsschaltventil 32 die in Fig. 1 dargestellte Position ein, in der die Kupplung 5 mit dem Hydraulikmittelreservoir 15 verbunden ist, so daß der Schaltdruck in der Kupplung 5 zusammenbricht. Dabei schließt die Kupplung 5 und verbindet über den Lenkstrang 2 die Lenkstange 3 mit der Lenkhandhabe 1, so daß die auf die Lenkhandhabe 1 aufgebrachten Lenkkräfte direkt auf die Lenkstange 3 übertragen werden können.

Auch das Speicherladeventil 31 ist ausfallsicher ausgestaltet. Zum Laden eines Druckspeichers 40 des Kupplungssystems wird das Speicherladeventil 31 aus der dargestellten Mittellage nach rechts verstellt. Zum Laden eines entsprechenden, nicht dargestellten Druckspeichers der Niveauregulierungseinrichtung wird das Speicherventil 31 entsprechend nach links verstellt. Im Notall kann das Speicherventil 31 stromlos geschaltet werden, so daß es selbsttätig die dargestellte Mittellage einnimmt, in der der Schaltdruck in der Kupplung 5 zusammenbricht.

Das erfindungsgemäße Lenksystem weist außerdem Mittel 33 auf, mit deren Hilfe eine Kollision des Fahrzeuges mit einem Hindernis verhindert wird. Diese Mittel können beispielsweise nicht dargestellte Abstandssensoren umfassen, mit denen die Relativlage eines Hindernisses bezüglich den Außenabmessungen des Fahrzeuges detektierbar ist. Im dargestellten Ausführungsbeispiel übermitteln die Kollisionsverhinderungsmittel 33 über eine entsprechende Signalleitung 34 die relativen Koordinaten eines festgestellten Hindernisses bezüglich dem Fahrzeug an die Regel- und Steueranordnung 8.

Über entsprechende Signaleingänge 35 verfügt die Regel- und Steueranordnung 8 außerdem über die notwendigen Angaben über den aktuellen Fahrzustand des Fahrzeuges, wie z.B. dessen Geschwindigkeit. Anhand des aktuellen Ist-Lenkwinkels kann die Regel- und Steueranordnung 8 aus der ermittelten Relativlage des Hindernisses dann einen Bereich von Lenkwinkeln errechnen, die zu einer Kollision zwischen dem Fahrzeug und dem Hindernis führen können, wenn sie an den Fahrzeugrädern 4 eingestellt werder.

Die Funktionsweise der erfindungsgemäß vorgeschlagenen Kollisionsverhinderung soll im folgenden anhand eines Beispieles näher erläutert werden:

Ein mit dem erfindungsgemäßen Lenksystem ausgestattetes erstes Fahrzeug fährt auf der rechten Spur einer in Fahrtrichtung zweispurigen Straße. Dem ersten Fahrzeug nähert sich mit unwesentlich höherer Geschwindigkeit ein zweites Fahrzeug auf der linken Spur, bis es im toten Winkel des auf der rechten Spur fahrenden ersten Fahrzeuges verschwindet. Nun möchte der Fahrer das ersten Fahrzeuges ein vor ihm fahrendes drittes Fahrzeug überholen, übersieht dabei das im toten Winkel befindliche zweite Fahrzeug und versucht den Spurwechsel einzuleiten.

Die Abstandssensoren der Kollisionsverhinderungsmittel 33 haben jedoch schon während der Annäherung des zweiten Fahrzeuges dieses als potentielles Hindernis erkannt und dementsprechende Kollisionslenkwinkel ermittelt. Diese Kollisionslenkwinkel werden für jede Änderung der Relativlage zwischen dem ersten und dem zweiten Fahrzeug ständig aktualisiert.

Um im vorliegenden Fall die Kollision zu verhindern, erzeugt die Regel- und Steueranordnung 8 spätestens beim Versuch, gegen das zweite Fahrzeug zu lenken, über den Handkraftsteller 27 eine Gegenlenkkraft, die es dem Fahrer erschwert, einen Kollisionslenkwinkel am Lenkhandrad 1 einzustellen.

Bei einer anderen Ausführungsform, die einer anderen Philosophie folgt, kann auch vorgesehen sein, daß die durch den Handkraftsteller 27 erzeugte Gegenkraft so groß ist, daß sich das Lenkhandrad 1 in die Richtung, in der von der Regel- und Steueranordnung 8 eine Kollisions erwartet wird, gar nicht drehen läßt. Bei beiden Ausführungsformen wird demnach die Einstellung eines kollisionsgefährdenden Soll-Lenkwinkels verhindert bzw. erschwert.

Ebenso wäre es auch möglich, bei einer ganz anderen Ausführungsform zwar eine Drehung des Lenkhandrades 1 in die kollisionsgefährdende Richtung zuzulassen, wobei dann aber die Regel- und Steueranordnung 8 diese nicht in ein entsprechendes Betätigungssignal für den Lenkstellantrieb 18 umwandelt. Im Unterschied zu den vorgenannten Ausführungsformen kann bei dieser Variante ein kollisionsgefährlicher Soll-Lenkwinkel eingestellt werden, der aber von der Regel- und Steueranordnung 8 nicht zu einem kritischen Ist-Lenkwinkel übersetzt wird.

Das erfindungsgemäße Lenksystem kann mit Hilfe zusätzlicher Maßnahmen weiter verbessert werden. Beispielsweise kann die Regel- und Steueranordnung 8 die ihr zur Verfügung gestellten Signalwerte zu der Feststellung auswerten, ob das Fahrzeug rangiert werden soll. In diesem Fall können beispielsweise andere, insbesondere geringere, Abstände zwischen dem Fahrzeug und einem detektierten Hindernis als kritisch erachtet werden, als dies beispielsweise bei hoher Fahrzeuggeschwindigkeit der Fall ist. Außerdem kann vorgesehen sein, daß bei Erreichen eines bestimmten Abstandsgrenzwertes über eine entsprechende Signalleitung 36 eine Fahrzeugbremse aktiviert wird, um das Fahrzeug noch vor einer Kollision anzuhalten.

Ebenso kann die Regel- und Steueranordnung 8 z.B. ein Schleudern des Fahrzeuges feststellen und einen Bremseingriff an einzelnen Rädern, sowie einen Eingriff in die Motorleistung, einen Eingriff in das Federungssystem und einen Eingriff in das Getriebe des Fahrzeuges durchführen, um das beispielsweise auf Glatteis ins Schleudern geratene Fahrzeug abzufangen.

Es ist klar, daß bei derart komplexen Situationen die Regel- und Steueranordnung 8 des Lenksystems mit einem Bordrechner des Fahrzeuges zusammenarbeitet oder zumindest teilweise in diesen integriert ist.

Außerdem kann bei vorteilhaften Ausführungsformen vorgesehen sein, daß zusätzlich zur Behinderung der Betätigung der Lenkhandhabe 1 in die "falsche" Richtung über den Handkraftsteller 27 eine Vibration auf das Lenkhandrad 1 übertragen wird, wodurch der Fahrer ein haptisches Warnsignal erhält. Zusätzlich könnte eine Signallampe oder eine Hupe aktiviert werden, um den Fahrer und/oder andere Verkehrsteilnehmer zu warnen.

Aufgrund der mechanischen Entkopplung zwischen Lenkhandhabe 1 und den lenkbaren Fahrzeugrädern 4 bei einem Steer-by-wire-System kann dieses System auch so ausgebildet sein, daß es selbsttätig Lenkmanöver ausführt. Beispielsweise könnte dadurch das Einparken in relativ engen Parklücken automatisch ablaufen. Auch kann vorgesehen sein, daß das Lenksystem ein Ausweichmanöver selbsttätig ausführt, wobei dann entsprechend weitreichende Entfernungs- bzw. Abstandsmeßgeräte erforderlich sind. Statt die Lenkmanöver selbsttätig durchzuführen könnte das System z.B. mittels Akustik-Signalen oder -Ansagen dringend ein Lenkmanöver empfehlen.

In einer sogenannten Notfallebene des Steer-by-wire-Systems, das heißt wenn die Lenkhandhabe 1 über den mechanischen Lenkstrang 2 bei geschlossener Kupplung 5 mit den lenkbaren Fahrzeugrädern 4 gekoppelt ist, kann der Lenkstellantrieb 18 als Servomotor dienen, so daß in dieser Notfallebene mehr oder weniger eine herkömmliche Servolenkung zur Verfügung steht. In gleicher Weise kann auch der Handkraftsteller 27 als Servomotor zur Unterstützung der vom Fahrer auf die Lenkhandhabe 1 aufgebrachten Kräfte verwendet werden.

Zur Kollisionsverhinderung können dann die genannten alternativ oder gemeinsam arbeitenden Servomotoren (Lenkstellantrieb 18 bzw. Handkraftsteller 27) Lenkbewegungen des Fahrers in eine Richtung, die voraussichtlich zu einer Kollision mit einem Hindernis führen wird, weniger stark unterstützen oder sogar blockieren. Auf diese Weise wird das Einstellen eines Kollisionswinkels erschwert oder verhindert. Darüber hinaus ist es auch in dieser Notfallebene möglich über die Regel- und Steueranordnung 8 die Servomotoren 18 bzw. 27 so anzusteuern, daß der Lenkkraft des Fahrers entgegenwirkende Gegenlenkkräfte auf den Lenkstrang 2 übertragen werden.

## Patentansprüche

1. Lenksystem für Kraftfahrzeuge
- mit einer vom Fahrer betätigbaren Lenkhandhabe (1), z.B. Lenkhandrad,
- mit einem Lenkstellantrieb (18) zur Lenkverstellung lenkbarer Fahrzeugräder (4),
- mit einem mit der Lenkhandhabe (1) betätigbaren Lenkwinkel-Sollwertgeber (6),
- mit einem mit den lenkbaren Fahrzeugrädern (4) betätigbaren Lenkwinkel-Istwertgeber (9),
- mit einer den Lenkstellantrieb (18) in Abhängigkeit von einem vergleich der Soll- und Istwerte des Lenkwinkels betätigenden Regel- und Steueranordnung (8),
**dadurch gekennzeichnet, dass** das Lenksystem Kollisionsverhinderungsmittel (33) aufweist, die eine Kollision zwischen dem Kraftfahrzeug und einem Hindernis ermöglichende Lenkwinkel (Kollisionslenkwinkel) ermitteln,
wobei die Regel- und Steueranordnung (8) das Einstellen eines mit einem der Kollisionslenkwinkel übereinstimmenden Soll-Lenkwinkels erschwert oder verhindert,
und wobei der Lenkstellantrieb (18) als hydraulisches Kolben-Zylinder-Aggregat ausgebildet ist.

2. Lenksystem nach dem Oberbegriff des Anspruches 1, insbesondere nach dem Kennzeichen des Anspruches 1,
**dadurch gekennzeichnet,**
**daß** die Regel- und Steueranordnung (8) den Lenkstellantrieb (18) derart betätigt, daß kein mit einem der Kollisionslenkwinkel übereinstimmender Ist-Lenkwinkel einstellbar ist.

3. Lenksystem nach einem der Ansprüche 1 oder 2,
**dadurch gekennzeichnet,**
**daß** das Lenksystem derart ausgebildet ist, daß es einen Steer-by-wire-Betrieb ermöglicht.

4. Lenksystem nach einem der Ansprüche 1 bis 3,
**dadurch gekennzeichnet,**
**daß** Gegenlenkmittel (27) vorgesehen sind, mit denen die Lenkhandhabe (1) mit einer Gegenlenkkraft beaufschlagbar ist, die der vom Fahrer auf die Lenkhandhabe (1) aufgebrachten Lenkkraft entgegenwirkt.

5. Lenksystem nach Anspruch 4,
**dadurch gekennzeichnet,**
**daß** die Gegenlenkmittel (27) eine Bremse aufweisen, die mit der Lenkhandhabe (1) gekoppelt ist.

6. Lenksystem nach Anspruch 4 oder 5,
**dadurch gekennzeichnet,**
**daß** die Gegenlenkmittel (27) einen Elektromotor aufweisen, der mit der Lenkhandhabe (1) gekoppelt ist.

7. Lenksystem nach einem der Ansprüche 4 bis 6,
**dadurch gekennzeichnet,**
**daß** ein von der Regel- und Steueranordnung (8) zur Simulation von auf die Lenkbaren Fahrzeugräder (4) einwirkenden Seitenkräften betätigter Handkraftsteller (27) vorgesehen ist, der mit der Lenkhandhabe (1) gekoppelt ist und auf diese reduzierte, simulierte Radkräfte überträgt, wobei der Handkraftsteller (27) zur Erzeugung der Gegenlenkkräfte als Gegenlenkmittel dient.

8. Lenksystem nach einem der vorhergehenden Ansprüche,
**dadurch gekennzeichnet,**
**daß** von der Regel- und Steueranordnung (8) betätigte Akustikmittel vorgesehen sind, die beim Versuch einen mit einem Kollisionslenkwinkel übereinstimmenden Lenkwinkel einzustellen ein akustisches Signal für den Fahrer generieren.

9. Lenksystem nach einem der vorhergehenden Ansprüche,
**dadurch gekennzeichnet,**
**daß** von der Regel- und Steueranordnung (8) betätigte Optikmittel vorgesehen sind, die beim Versuch ein mit einem Kollisionslenkwinkel übereinstimmenden Lenkwinkel einzustellen ein optischer Signal für den Fahrer generieren.

10. Lenksystem nach der vorhergehenden Ansprüche,
**dadurch gekennzeichnet,**
**daß** von der Regel- und Steueranordnung (8) betätigte Haptikmittel (27) vorgesehen sind, die beim Versuch einen mit einem Kollisionslenkwinkel übereinstimmenden Lenkwinkel einzustellen ein haptisches Signal für den Fahrer generieren.

11. Lenksystem nach Anspruch 10,
**dadurch gekennzeichnet,**
**daß** das haptische Signal in Form einer Schwingung oder Vibration ausgebildet ist, die an der Lenkhandhabe (1) erzeugt wird.

12. Lenksystem nach Anspruch 11,
**dadurch gekennzeichnet,**
**daß** die Regel- und Steueranordnung (8) die auf die Lenkhandhabe (1) einwirkende Vibration oder Schwingung aus den vom Fahrer auf die Lenkhandhabe aufgebrachten Lenkkräften ausfiltert und nicht dem Soll-Lenkwinkel zuordnet.

13. Lenksystem nach einem der Ansprüche 4 bis 9 und einem der Ansprüche 10 bis 12,
**dadurch gekennzeichnet,**
**daß** die Gegenlenkmittel (27) als Haptikmittel dienen und die haptischen Signale an der Lenkhandhabe (1) erzeugen.

14. Lenksystem nach einem der vorhergehenden Ansprüche,
**dadurch gekennzeichnet,**
**daß** bei Vorliegen eines mit einem der Kollisionslenkwinkel übereinstimmenden Ist-Lenkwinkel die Regel- und Steueranordnung (8) durch entsprechende Betätigung des Lenkstellantriebes (18) einen Lenkeingriff zur Einstellung eines nicht mit einem der Kollisionslenkwinkel übereinstimmenden Lenkwinkels durchführt, wobei dieser Lenkeingriff unabhängig vom Soll-Lenkwinkel erfolgen kann.

15. Lenksystem nach Anspruch 14,
**dadurch gekennzeichnet,**
**daß** der vom Soll-Lenkwinkel unabhängige Lenkeingriff in Abhängigkeit des aktuellen Fahrzustandes des Fahrzeuges durchgeführt wird, wobei entsprechende Mittel zur Feststellung des aktuellen Fahrzustandes vorgesehen sind.

16. Lenksystem nach einem der vorhergehenden Ansprüche,
**dadurch gekennzeichnet,**
**daß** die Regel- und Steueranordnung in Abhängigkeit des aktuellen Fahrzustandes des Fahrzeuges einen Bremseingriff und/oder einen Motoreingriff und/oder einen Getriebeeingriff und/oder einen Federungseingriff durchführt.

## Claims

1. Steering system for motor vehicles
- comprising a steering handle (1), e.g. steering handwheel, which can be operated by the driver,
- comprising a steering actuator (18) for steering adjustment of steerable vehicle wheels (4),
- comprising a steering-angle,setpoint transducer (6) which can be operated by means of the steering handle (1),
- comprising a steering-angle actual-value transducer (9) which can be operated by means of the steerable vehicle wheels (4),
- comprising a closed-loop and open-loop control arrangement (8) which operates the steering actuator (18) in dependence on a comparison of the setpoint and actual values of the steering angle,
**characterized in that** the steering system has collision prevention means (33) which determine steering angles (collision steering angles) that render possible a collision between the motor vehicle and an obstacle,
the closed-loop and open-loop control arrangement (8) impeding or preventing the setting of a setpoint steering angle corresponding to one of the collision steering angles,
and the steering actuator (18) being designed as a hydraulic piston-cylinder set.

2. Steering system according to the preamble of claim 1, particularly according to the characterizing portion of claim 1,
**characterized in that**
the closed-loop and open-loop control arrangement (8) operates the steering actuator (18) in such a way that no actual steering angle corresponding to one of the collision steering angles can be set.

3. Steering system according to either of claims 1 or 2,
**characterized in that**
the steering system is of such design that it permits a steer-by-wire operation.

4. Steering system according to any one of claims 1 to 3,
**characterized in that**
counter-steering means (27) are provided, by means of which there can be applied to the steering handle (1) a counter-steering force which counters the steering force applied to the steering handle (1) by the driver.

5. Steering system according to claim 4,
**characterized in that**
the counter-steering means (27) have a brake which is coupled to the steering handle (1).

6. Steering system according to either of claims 4 or 5,
**characterized in that**
the counter-steering means (27) have an electric motor which is coupled to the steering handle (1).

7. Steering system according to any one of claims 4 to 6,
**characterized in that**
there is provided a manual-force controller (27), which is operated by the closed-loop and open-loop control arrangement (8) for the purpose of simulating lateral forces acting on the vehicle wheels (4), and which is coupled to the steering handle (1) and transmits reduced, simulated wheel forces to the latter, the manual-force controller (27) serving to generate the counter-steering forces as counter-steering means.

8. Steering system according to any one of the preceding claims,
**characterized in that**
there are provided acoustic means which are operated by the closed-loop and open-loop control arrangement (8) and which generate an acoustic signal for the driver in the case of an attempt to set a steering angle corresponding to a collision steering angle.

9. Steering system according to any one of the preceding claims,
**characterized in that**
there are provided optical means which are operated by the closed-loop and open-loop control arrangement (8) and which generate an optical signal for the driver in the case of an attempt to set a steering angle corresponding to a collision steering angle.

10. Steering system according to the preceding claims,
**characterized in that**
there are provided haptic means (27) which are operated by the closed-loop and open-loop control arrangement (8) and which generate a haptic signal for the driver in the case of an attempt to set a steering angle corresponding to a collision steering angle.

11. Steering system according to claim 10,
**characterized in that**
the haptic signal is realized in the form of an oscillation or a vibration which is generated at the steering handle (1).

12. Steering system according to claim 11,
**characterized in that**
the closed-loop and open-loop control arrangement (8) filters out from the steering forces applied to the steering handle by the driver the vibration or oscillation acting on the steering handle (1), and does not assign it to the setpoint steering angle.

13. Steering system according to any one of claims 4 to 9 and any one of claims 10 to 12,
**characterized in that**
the counter-steering means (27) serve as haptic means and generate the haptic signals at the steering handle (1).

14. Steering system according to any one of the preceding claims,
**characterized in that**
in the case of presence of an actual steering angle corresponding to one of the collision steering angles, the closed-loop and open-loop control arrangement (8) performs a steering intervention, through corresponding operation of the steering actuator (18), in order to set a steering angle which does not correspond to one of the collision steering angles, this steering intervention being able to be effected irrespective of the setpoint steering angle.

15. Steering system according to claim 14,
**characterized in that**
the steering intervention that is irrespective of the setpoint steering angle is performed in dependence on the current travel state of the vehicle, corresponding means being provided for the purpose of ascertaining the current travel state.

16. Steering system according to any one of the preceding claims,
**characterized in that**
the closed-loop and open-loop control arrangement performs a braking intervention and/or a motor intervention and/or a transmission intervention and/or a suspension intervention in dependence on the current travel state of the vehicle.

## Revendications

1. Système de direction pour véhicules à moteur, comprenant :
une commande (1) de direction pouvant être actionnée par le conducteur, par exemple un volant à main de direction ;
un servomoteur (18) de direction, destiné au réglage de direction de roues (4) de véhicule dirigeables ;
un émetteur (6) de valeur de consigne d'angle de direction, pouvant être actionné par la commande (1) de direction ;
un émetteur (9) de valeur réelle d'angle de direction, pouvant être actionné par les roues (4) de véhicule dirigeables ; et
un dispositif (8) de réglage et de commande actionnant le servomoteur (18) de direction en fonction d'une comparaison de la valeur de consigne et de la valeur réelle de l'angle de direction ;
**caractérisé en ce que** le système de direction présente un moyen (33) d'empêchement de collision qui détecte un angle de direction rendant possible une collision entre le véhicule à moteur et un obstacle (angle de direction de collision),
dans lequel le dispositif (8) de réglage et de commande rend plus difficile ou empêche le réglage d'un angle de direction de consigne correspondant à l'un des angles de direction de collision,
et dans lequel le servomoteur (18) de direction est mis en oeuvre sous la forme d'une unité hydraulique de piston et de cylindre.

2. Système de direction selon le préambule de la revendication 1, en particulier selon la caractéristique de la revendication 1, **caractérisé en ce que** le dispositif (8) de réglage et de commande actionne le servomoteur (18) de direction de telle manière qu'aucun angle réel de direction correspondant à l'angle de direction de collision n'est réglable.

3. Système de direction selon l'une quelconque des revendications 1 ou 2, **caractérisé en ce que** le système de direction est formé de telle manière qu'il rend possible un fonctionnement de « pilotage par fil ».

4. Système de direction selon l'une quelconque des revendications 1 à 3, **caractérisé en ce qu'**il est prévu des moyens (27) de contre-direction, avec lesquels la commande (1) de direction peut être appliquée avec une force de contre-direction qui agit contre la force de direction appliquée par le conducteur sur la commande (1) de direction.

5. Système de direction selon la revendication 4, **caractérisé en ce que** les moyens (27) de contre-direction présentent un frein qui est couplé à la commande (1) de direction.

6. Système de direction selon la revendication 4 ou 5, **caractérisé en ce que** les moyens (27) de contre-direction présentent un moteur électrique qui est couplé à la commande (1) de direction.

7. Système de direction selon l'une quelconque des revendications 4 à 6, **caractérisé en ce qu'**il est prévu un actionneur (27) de force manuelle, actionné par le dispositif (8) de réglage et de commande et destiné à la simulation de forces latérales influençant sur les roues (4) de direction, lequel actionneur est couplé à la commande (1) de direction et transmet des forces de volant réduites, simulées vers celle-ci, dans lequel l'actionneur (27) de force manuelle sert de moyen de contre-direction pour la production de forces de contre-direction.

8. Système de direction selon l'une quelconque des revendications précédentes, **caractérisé en ce que** des moyens acoustiques actionnés par le dispositif (8) de réglage et de commande sont prévus, lesquels génèrent un signal acoustique pour le conducteur lors de la tentative de régler un angle de direction correspondant à un angle de direction de collision.

9. Système de direction selon l'une quelconque des revendications précédentes, **caractérisé en ce qu'**il est prévu des moyens optiques actionnés par le dispositif (8) de réglage et de commande, lesquels génèrent un signal optique pour le conducteur lors de la tentative de régler un angle de direction correspondant à un angle de direction de collision.

10. Système de direction selon l'une quelconque des revendications précédentes, **caractérisé en ce qu'**il est prévu des moyens haptiques (27) actionnés par le dispositif (8) de réglage et de commande, lesquels génèrent un signal haptique pour le conducteur lors de la tentative de régler un angle de direction correspondant à un angle de direction de collision.

11. Système de direction selon la revendication 10, **caractérisé en ce que** le signal haptique est mis en oeuvre sous la forme d'une oscillation ou d'une vibration, laquelle est produite sur la commande (1) de direction.

12. Système de direction selon la revendication 11, **caractérisé en ce que** le dispositif (8) de réglage et de commande extrait par filtrage la vibration ou l'oscillation influençant sur la commande (1) de direction à partir des forces de direction appliquées par le conducteur sur la commande de direction et ne l'attribue pas à l'angle de direction de consigne.

13. Système de direction selon l'une quelconque des revendications 4 à 9 et l'une quelconque des revendications 10 à 12, **caractérisé en ce que** les moyens (27) de contre-direction servent de moyens haptiques et produisent les signaux haptiques sur la commande (1) de direction.

14. Système de direction selon l'une quelconque des revendications précédentes, **caractérisé en ce que**, en présence d'un angle de direction réel correspondant à un angle de direction de collision, le dispositif (8) de réglage et de commande effectue, par un actionnement correspondant du servomoteur (18) de direction, une intervention de direction destinée au réglage d'un angle de direction non correspondant à l'angle de direction de collision, dans lequel cette intervention de direction peut se produire indépendamment de l'angle de direction de consigne.

15. Système de direction selon la revendication 14, **caractérisé en ce que** l'intervention de direction indépendante de l'angle de direction de consigne est effectuée en fonction de l'état de conduite actuel, dans lequel des moyens correspondants destinés à l'établissement de l'état de conduite actuel sont prévus.

16. Système de direction selon l'une quelconque des revendications précédentes, **caractérisé en ce que** le dispositif de réglage et de commande effectue, en fonction de l'état de conduite actuel, une intervention de freinage et/ou une intervention de moteur et/ou une intervention de transmission et/ou une intervention de suspension.
